# EUROPÄISCHE PATENTSCHRIFT

(11) **EP 0 751 333 B1**
(45) Veröffentlichungstag und Bekanntmachung des Hinweises auf die Patenterteilung: **02.08.2000**
(21) Anmeldenummer: 96107140.4
(22) Anmeldetag: 07.05.1996
(51) Int. Cl.: F16L 37/088

(54) **Steckverbindung für Druckmittelleitungen**
Plug connector for pressure conduit systems
Raccord à emboîtement pour systèmes sous pression

(30) Priorität: 27.06.1995 DE 19523298
(43) Veröffentlichungstag der Anmeldung: 02.01.1997
(73) Patentinhaber: Armaturenfabrik Hermann Voss GmbH + Co., 51688 Wipperfürth (DE)
(72) Erfinder: Goller, Bernd, 51688 Wipperfürth (DE)
(74) Vertreter: Patentanwälte Dr. Solf & Zapf

(56) Entgegenhaltungen:
- EP-A- 0 005 865
- DE-A- 3 235 058
- DE-A- 3 341 029
- US-A- 5 112 086

## Beschreibung

Die vorliegende Erfindung betrifft eine Steckverbindung für Druckmittelleitungen nach dem Oberbegriff des Anspruchs 1 bzw. des Anspruchs 2.

Eine derartige Steckverbindung ist beispielsweise aus der EP-A- 0 005 865 bereits bekannt. Diese Steckverbindung besteht im wesentlichen aus einem zweiteiligen, verschraubbaren Gehäuseteil und einem mit dem Gehäuseteil lösbar verbindbaren Kupplungsteil, wobei in dem Gehäuseteil ein axial wirkendes Federelement und auf dem Kupplungsteil in Herausziehrichtung gesehen axial voneinander beabstandet ein Haltering und ein für die Druckabdichtung maßgeblicher Dichtungsring (Hauptdichtung) angeordnet sind. Dabei kann das Federelement als ringförmiger Gummipuffer ausgebildet sein und hierdurch gleichzeitig auch als Dichtungselement fungieren. In einer anderen Ausführungsform dieser Steckverbindung ist der Dichtungsring in Einsteckrichtung gesehen von dem Haltering beabstandet und das Federelement nicht innerhalb, sondern im eingesteckten Zustand gesehen außerhalb des Gehäuseteils zwischen Kupplungs- und Gehäuseteil auf dem Kupplungsteil angeordnet. Derartige Steckverbindungen haben sich bisher bereits gut bewährt und sollen weiter verbessert werden.

Die US-A-5 112 086 beschreibt eine Rohrkupplung, bei der ein Dichtring vorgesehen ist, der aus einem zylindrischen Abschnitt und einem radialen Flansch besteht. Der radiale Flansch ist jedoch in dieser Druckschrift nicht als Federelement beschrieben, sondern es soll ein Abschnitt des Steckerteils zur Auflage auf dem Flansch kommen, wenn das Steckerteil ganz in eine Hülse und den Dichring eingesteckt ist. Der Dichtring weist auf seiner dem Flansch axial abgekehrten Seite einen nach innen eingebeulten Rand auf. Ein innerer Ring soll mit seinem freien Ende gegen diesen Rand zur Anlage kommen.

Der vorliegenden Erfindung liegt die Aufgabe zugrunde, eine Steckverbindung zu schaffen, die die Vorteile einer schnell lösbaren und sicheren Steckverbindung in sich vereint und die Abdichtung zwischen Stecker und Gehäuseteil sowie eine axiale Vorspannung zwischen diesen beiden Teilen mit einfachsten Mitteln gewährleistet und eine Montage von Dicht- und Federelement deutlich erleichtert.

Erfindungsgemäß wird dies durch die kennzeichnenden Merkmale des Anspruchs 1 bzw. des Anspruchs 2 erreicht. Demnach sind das Federelement und das Dichtungselement jeweils axial beabstandet, dabei aber dennoch über einen Verbindungsteil einteilig verbunden. Dieses einteilige Kombinationselement ist bevorzugt einheitlich aus einem elastischen Material ausgeführt. In der ersten Ausführungsform der Steckverbindung ist das Kombinationselement derart auf dem Steckerteil angeordnet, daß es mit seinem Dichtungselement in einer ersten Ringnut des Steckerteils gehalten ist, wobei das Federelement auf der Stirnfläche des Steckerteils angeordnet ist und diese beiden Teile über das Verbindungsteil, vorzugsweise einen umfänglich geschlossenen Verbindungsring, miteinander verbunden sind. In einer zweiten Ausführungsform der Erfindung ist es vorgesehen, dieses Kombinationselement innerhalb des Gehäuseteils anzuordnen, so daß das Kombinationselement mit seinem ringförmigen Dichtungselement innerhalb einer ersten Ringnut des Gehäuseteils und das Federelement in Einsteckrichtung gesehen im Endbereich der Aufnahme des Gehäuseteils auf einer Begrenzungsstufe angeordnet ist.

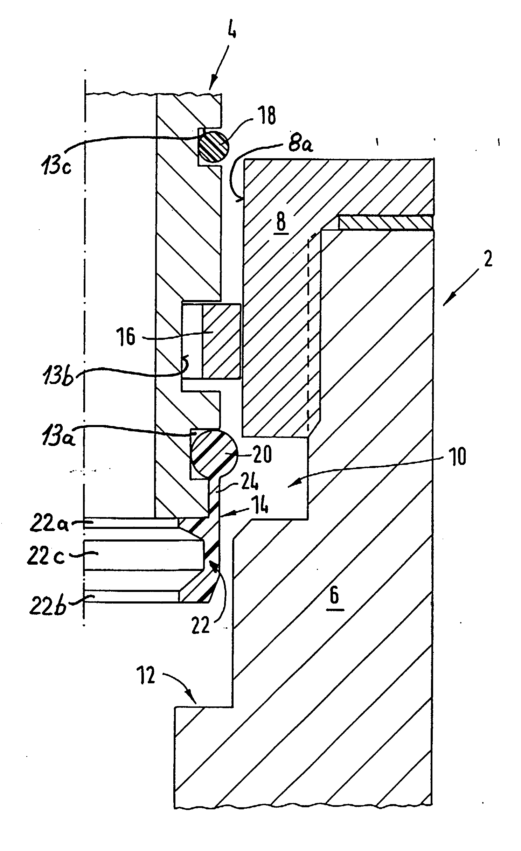

Weitere vorteilhafte Ausgestaltungsmerkmale der Erfindung sind in der nachfolgenden Beschreibung der Zeichnung sowie in den Unteransprüchen enthalten.

Die einzige Zeichnungsfigur zeigt in einer schematischen, bezüglich der Größenverhältnisse - insbesondere was einen Ringspalt zwischen den Steckteilen betrifft - nicht maßstäblichen Prinzip-Darstellung eine erste, bevorzugte Ausführungsform der erfindungsgemäßen Steckverbindung im Halbschnitt, wobei diese im wesentlichen aus einem Gehäuseteil 2 und einem Steckerteil 4 besteht. Dabei ist das Gehäuseteil 2 vorzugsweise zweiteilig ausgeführt und besteht aus einem Aufnahmeteil 6 und einem Verschlußteil 8. Diese beiden Teile sind über beliebige Verbindungsmittel, wie eine Rastverbindung, eine Bajonettverbindung, aber - wie dargestellt - insbesondere über eine Schraubverbindung lösbar miteinander verbunden, wobei das Aufnahmeteil 6 vorzugsweise ein Innengewinde und das Verschlußteil 8 vorzugsweise ein Außengewinde aufweist. Mit Vorteil weist das Aufnahmeteil 6 in Einsteckrichtung gesehen eine zweistufige Stufenbohrung auf, wobei die erste Stufe mit der ringförmigen Stirnfläche des eingeschraubten Verschlußteils 8 eine Haltenut 10 und die zweite Stufe eine Art Begrenzungsstufe 12 für das einzusteckende Steckerteil 4 bildet.

Das Steckerteil 4 weist auf der Außenfläche seines einzusteckenden Steckabschnittes vorzugsweise drei umfängliche Ringnuten 13a,13b,13c auf. Diese Ringnuten dienen insbesondere der Halterung eines Kombinationselementes 14, eines Halteelementes 16 sowie einer Schmutzdichtung 18. Das Kombinationselement 14 ist erfindungsgemäß als einteiliges, aus einem ringförmigen Dichtungselement 20 als Hauptdichtung, einem ebenfalls ringförmigen Federelement 22 und einem diese beiden Teile verbindenden Verbindungsteil 24 bestehendes (gummi-)elastisches Teil (Formteil) ausgeführt. Das Kombinationselement 14 kann dabei materialeinheitlich aus Natur- oder Kunstkautschuk (Gummi) oder einem geeigneten Kunststoff bestehen. Es sind auch beliebige Material-Kombinationen möglich; vorteilhafterweise kann im Bereich des Dichtungselementes 20 ein erstes, dichtspezifisch vorteilhaftes Material und im Bereich des Federelementes 22 ein zweites, bezüglich der Federelastizität günstiges Material sowie eventuell für den Verbindungsteil 24 ein drittes Material eingesetzt werden, wobei die Materialien homogen verbindbar sein sollten.

In einer bevorzugten Ausführungsform der Steckverbindung sind sowohl das Kombinationselement 14 als auch das Halteelement 16 und die Schmutzdichtung 18 am Steckerteil 4 gehalten, indem sie in jeweils einer der drei Ringnuten des Steckerteils 4 sitzen. Erfindungsgemäß ist dabei das Kombinationselement 14 in Herausziehrichtung gesehen mit dem Dichtungselement 20 in der ersten Ringnut 13a des Steckerteils 4 derart nahe dem freien Stirnbereich des Steckerteils 4 angeordnet, daß das Federelement 22 des Kombinationselementes 14 auf der Stirnfläche des Steckerteils 4 angeordnet ist, wobei der Verbindungsteil 24 sich vom Dichtungselement 20 in axialer Richtung entlang der Außenfläche des Steckerteils 4 bis zum Federelement 22 erstreckt. Im eingesteckten Zustand des Steckerteils 4 kann somit das Federelement 22 zwischen der Stirnfläche des Steckerteils 4 und der Begrenzungsstufe 12 des Gehäuseteils 2 derart elastisch zusammengedrückt werden, daß zwischen diesen beiden Teilen eine axiale Vorspannung erzeugt wird. Das Federelement 22 besteht wie dargestellt vorzugsweise aus zwei ringförmigen, stegartig radial nach innen weisenden, elastischen Teilen 22a, 22b, die axial voneinander beabstandet und gehäusewandseitig über ein vorzugsweise als umfänglich geschlossenes elastisches Ringelement ausgeführtes Verbindungsteil 22c miteinander verbunden sind. Dadurch wird bei einem axialen Zusammendrücken des Federelements 22 insbesondere das Verbindungsteil 22c in Richtung Gehäusewand radial nach außen gedrückt und so eine zusätzliche gute Abdichtung zwischen dem Steckerteil 4 und dem Gehäuseteil 2 erreicht.

Vorzugsweise ist in der zweiten Ringnut 13b des Steckerteils 4, die in Herausziehrichtung gesehen axial von der ersten Ringnut 13a beabstandet ist, das Halteelement 16 angeordnet. Das Halteelement 16 ist vorzugsweise als radial elastischer, geschlitzter Haltering ausgeführt, der sich im eingesteckten Zustand in die Haltenut 10 des Gehäuseteils 2 derart erweitert, daß das Steckerteil 4 kraft- und/oder formschlüssig im Gehäuseteil 2 gehalten ist. Dabei ist das Steckerteil 4 im eingesteckten Zustand durch die in der dritten Ringnut 13c des Steckerteils 4 angeordnete Schmutzdichtung 18 gegen die Innenwand des Gehäuseteils 2 bzw. gegen die Innenfläche 8a des hohlzylindrischen Verschlußteils 8 abgedichtet.

In einer bevorzugten Ausführungsform des erfindungsgemäßen Kombinationselementes 14 sind das Dichtungselement 20 und das Federelement 22 über das als umfänglich geschlossener Verbindungsring ausgeführte Verbindungsteil 24 miteinander verbunden. Alternativ dazu ist es natürlich ebenfalls denkbar, dieses Verbindungsteil 24 in Form eines einzelnen oder mehrerer Verbindungsstege auszuführen. Bei der erfindungsgemäßen Steckverbindung ist die Anordnung von Kombinationselement 14, Halteelement 16 und Schmutzdichtung 18 auf dem Steckerteil 4 nicht zwingend, sondern es ist ebenfalls möglich, das Kombinationselement 14 innerhalb des Gehäuseteils, insbesondere im Bereich der Begrenzungsstufe 12 anzuordnen, wobei das Halteelement 16 dann entweder auf dem Steckerteil 4 oder aber im Gehäuseteil 2 angeordnet sein kann. Falls das Kombinationselement 14 jedoch - wie beschrieben - am Steckerteil 4 angeordnet sein sollte, erweist es sich als durchaus vorteilhaft, das Halteelement 16 ebenfalls am Steckerteil 4 anzuordnen; denn wenn anderenfalls das Kombinationselement 14 am Steckerteil 4 und das Halteelement 16 innerhalb des Gehäuseteils 2 angeordnet wären, würde das Kombinationselement 14 bei jedem Steckvorgang an dem Halteelement 16 vorbeigeführt werden müssen und könnte bei diesem Vorgang evtl. beschädigt werden. Weiterhin ist es denkbar, für das kraft- und/oder formschlüssige Zusammenwirken mit dem Haltelement 16 das entsprechende Stecker- bzw. Gehäuseteil 4,2 (je nach Anordnung des Halteelementes 16) - anstatt mit einer Nut - zu diesem Zweck mit einer einfachen radialen Stufenfläche (Raststufe) zu versehen.

Das Kombinationselement 14 kann auch aus ursprünglich mehreren Einzelteilen bestehen, die insbesondere stoffschlüssig miteinander verbunden werden. Dabei kann als Federelement anstatt eines gummielastischen Puffers auch eine andere Federart vorgesehen sein (z.B. Druckfeder aus Federstahl stoffschlüsssig, insbesondere durch Vulkanisieren oder Verkleben, mit dem Dichtungselement verbunden).

## Patentansprüche

1. Steckverbindung für Druckmittelleitungen, bestehend aus einem Gehäuseteil (2) und einem Steckerteil (4), wobei das Gehäuseteil (2) einen Aufnahmebereich für das einzusteckende Steckerteil (4) aufweist und im eingesteckten Zustand zwischen der Innenfläche des Gehäuseteils (2) und der Außenfläche des Steckerteils (4) mindestens ein Halteelement (16) zum kraft- und/ oder formschlüssigen Arretieren von Gehäuseteil (2) und Steckerteil (4) sowie ein als Ringdichtung ausgebildetes Dichtungselement (20) zur Abdichtung zwischen diesen beiden Teilen und ein als elastisches Ringteil ausgebildetes Federelement (22) zur Erzeugung einer axialen, in Löserichtung wirkenden Vorspannung innerhalb der Steckverbindung angeordnet sind, wobei das Gehäuseteil (2) eine in Einsteckrichtung gesehen den Aufnahmebereich begrenzende und den Innenquerschnitt verkleinernde Begrenzungsstufe (12) aufweist, die im eingesteckten und arretierten Zustand des Steckerteils (4) mit dem Federelement (22) zur Erzeugung der axialen Vorspannung zwischen dem Steckerteil (4) und dem Gehäuseteil (2) zusammenwirkt, und wobei das Federelement (22) und das Dichtungselement (20) als einteiliges Kombinationselement (14) ausgeführt sind,
**dadurch gekennzeichnet,** daß das Kombinationselement (14) im einzusteckenden Stirnbereich des Steckerteils (4) auf diesem angeordnet ist, wobei das als Ringdichtung ausgeführte Dichtungselement (20) in einer ersten Ringnut (13a) des Steckerteils (4) gehalten ist und das als elastisches Ringteil ausgebildete Federelement (22) auf der Stirnfläche des Steckerteils (4) angeordnet ist und diese beiden Teile über einen Verbindungsteil (24) einteilig verbunden sind.

2. Steckverbindung für Druckmittelleitungen, bestehend aus einem Gehäuseteil (2) und einem Steckerteil (4), wobei das Gehäuseteil (2) einen Aufnahmebereich für das einzusteckende Steckerteil (4) aufweist und im eingesteckten Zustand zwischen der Innenfläche des Gehäuseteils (2) und der Außenfläche des Steckerteils (4) mindestens ein Halteelement (16) zum kraft- und/ oder formschlüssigen Arretieren von Gehäuseteil (2) und Steckerteil (4) sowie ein als Ringdichtung ausgebildetes Dichtungselement (20) zur Abdichtung zwischen diesen beiden Teilen und ein als elastisches Ringteil ausgebildetes Federelement (22) zur Erzeugung einer axialen, in Löserichtung wirkenden Vorspannung innerhalb der Steckverbindung angeordnet sind, wobei das Gehäuseteil (2) eine in Einsteckrichtung gesehen den Aufnahmebereich begrenzende und den Innenquerschnitt verkleinernde Begrenzungsstufe (12) aufweist, die im eingesteckten und arretierten Zustand des Steckerteils (4) mit dem Federelement (22) zur Erzeugung der axialen Vorspannung zwischen dem Steckerteil (4) und dem Gehäuseteil (2) zusammenwirkt, und wobei das Federelement (22) und das Dichtungselement (20) als einteiliges Kombinationselement (14) ausgeführt sind und dieses Kombinationselement (14) auf der Innenfläche des Gehäuseteils (2) angeordnet ist und das Federelement (22) auf der Begrenzungstufe (12) im Innern des Gehäuseteils (2) aufliegt,
**dadurch gekennzeichnet**, daß das Dichtungselement (20) in einer ersten Ringnut des Gehäuseteils (2) gehalten ist und über einen Verbindungsteil (24) einteilig mit dem Federelement (22) verbunden ist.

3. Steckverbindung nach Anspruch 1 oder 2,
**dadurch gekennzeichnet**, daß der Verbindungsteil (24) als umfänglich geschlossener Verbindungsring ausgeführt ist.

4. Steckverbindung nach Anspruch 1 oder 2,
**dadurch gekennzeichnet**, daß der Verbindungsteil (24) zwischen Dichtungselement (20) und Federelement (22) aus mindestens einem Verbindungssteg, vorzugsweise aus mehreren über den Umfang verteilt angeordneten Verbindungsstegen, besteht.

5. Steckverbindung nach einem oder mehreren der Ansprüche 1 bis 4,
**dadurch gekennzeichnet**, daß das Halteelement (16) in Herausziehrichtung gesehen von dem Kombinationselement (14) beabstandet in einer zweiten Ringnut (13b) auf dem Steckerteil (4) angeordnet ist und das Gehäuseteil (2) eine radiale Stufenfläche zum kraft- und/oder formschlüssigen Zusammenwirken mit dem auf dem Steckerteil (4) angeordneten Halteelement (16) aufweist.

6. Steckverbindung nach einem oder mehreren der Ansprüche 1 bis 4,
**dadurch gekennzeichnet**, daß das Halteelement (16) auf der Innenfläche des Gehäuseteils (2) in Herausziehrichtung gesehen axial von dem Kombinationselement (14) beabstandet in einer zweiten Ringnut des Gehäuseteils (2) angeordnet ist und das Steckerteil (4) eine radiale Stufenfläche zum kraft- und/oder formschlüssigen Zusammenwirken mit dem im Gehäuseteil (2) angeordneten Halteelement (16) aufweist.

7. Steckverbindung nach einem oder mehreren der Ansprüche 1 bis 6,
**dadurch gekennzeichnet**, daß das Halteelement (16) als geschlitzter radialelastischer Haltering ausgeführt ist.

8. Steckverbindung nach einem oder mehreren der Ansprüche 1 bis 7,
**dadurch gekennzeichnet**, daß in einer weiteren Ringnut (13c) des Steckerteils (4) in Herausziehrichtung gesehen vom Halteelement (16) beabstandet eine Schmutzdichtung (18) angeordnet ist.

9. Steckverbindung nach einem oder mehreren der Ansprüche 1 bis 8,
**dadurch gekennzeichnet**, daß das Gehäuseteil (2) zweiteilig ausgeführt ist und aus einem Aufnahmeteil (6) und einem Verschlußteil (8) besteht, wobei diese beiden Teile lösbar miteinander verbunden sind.

## Claims

1. Plug-in connection for pressure-medium conduits, comprising a housing part (2) and a plug part (4), it being the case that the housing part (2) has a receiving region for the plug part (4) which is to be plugged in, and provided, in the plugged-in state, between the inner surface of the housing part (2) and the outer surface of the plug part (4) are at least one retaining element (16), for the purpose of arresting the housing part (2) and plug part (4) in a frictionally locking and/or positively locking manner, and a sealing element (20), which is designed as an annular seal and is intended for sealing between said two parts, and a spring element (22), which is designed as an elastic ring part and is intended for producing axial prestressing, acting in the release direction, within the plug-in connection, it being the case that the housing part (2) has a boundary step (12) which bounds the receiving region, as seen in the plug-in direction, reduces the size of the inner cross section and, in the plugged-in and arrested state of the plug part (4), interacts with the spring element (22) in order to produce the axial prestressing between the plug part (4) and the housing part (2), and it being the case that the spring element (22) and the sealing element (20) are designed as a single-piece combination element (14), characterized in that the combination element (14) is arranged on the plug part (4), in the end region of the latter which is to be plugged in, it being the case that the sealing element (20), which is designed as an annular seal, is retained in a first annular groove (13a) of the plug part (4) and the spring element (22), which is designed as an elastic ring part, is arranged on the end surface of the plug part (4), and said two parts are connected integrally via a connecting part (24).

2. Plug-in connection for pressure-medium conduits, comprising a housing part (2) and a plug part (4), it being the case that the housing part (2) has a receiving region for the plug part (4) which is to be plugged in, and provided, in the plugged-in state, between the inner surface of the housing part (2) and the outer surface of the plug part (4) are at least one retaining element (16), for the purpose of arresting the housing part (2) and plug part (4) in a frictionally locking and/or positively locking manner, and a sealing element (20), which is designed as an annular seal and is intended for sealing between said two parts, and a spring element (22), which is designed as an elastic ring part and is intended for producing axial prestressing, acting in the release direction, within the plug-in connection, it being the case that the housing part (2) has a boundary step (12) which bounds the receiving region, as seen in the plug-in direction, reduces the size of the inner cross section and, in the plugged-in and arrested state of the plug part (4), interacts with the spring element (22) in order to produce the axial prestressing between the plug part (4) and the housing part (2), and it being the case that the spring element (22) and the sealing element (20) are designed as a single-piece combination element (14), and this combination element (14) is arranged on the inner surface of the housing part (2), and the spring element (22) rests on the boundary step (12) in the interior of the housing part (2), characterized in that the sealing element (20) is retained in a first annular groove of the housing part (2) and is connected integrally to the spring element (22) via a connecting part (24).

3. Plug-in connection according to Claim 1 or 2, characterized in that the connecting part (24) is designed as a circumferentially closed connecting ring.

4. Plug-in connection according to Claim 1 or 2, characterized in that the connecting part (24) between the sealing element (20) and spring element (22) comprises at least one connecting web, preferably a plurality of connecting webs distributed over the circumference.

5. Plug-in connection according to one or more of Claims 1 to 4, characterized in that the retaining element (16) is arranged on the plug part (4), in a second annular groove (13b), spaced apart from the combination element (14) as seen in the drawing-out direction, and the housing part (2) has a radial step surface for the frictionally locking and/or positively locking interaction with the retaining element (16), which is arranged on the plug part (4).

6. Plug-in connection according to one or more of Claims 1 to 4, characterized in that the retaining element (16) is arranged on the inner surface of the housing part (2), in a second annular groove of the housing part (2), spaced apart axially from the combination element (14) as seen in the drawing-out direction, and the plug part (4) has a radial step surface for the frictionally locking and/or positively locking interaction with the retaining element (16), which is arranged in the housing part (2).

7. Plug-in connection according to one or more of Claims 1 to 6, characterized in that the retaining element (16) is designed as a split radially elastic retaining ring.

8. Plug-in connection according to one or more of Claims 1 to 7, characterized in that a dirt seal (18) is arranged in a further annular groove (13c) of the plug part (4), spaced apart from the retaining element (16) as seen in the drawing-out direction.

9. Plug-in connection according to one or more of Claims 1 to 8, characterized in that the housing part (2) is of two-part design and comprises a receiving part (6) and a closure part (8), these two parts being connected to one another in a releasable manner.

## Revendications

1. Raccord à emboîtement pour tuyaux sous pression, comprenant une partie logement (2) et une partie à emboîter (4), la partie logement (2) présentant une zone de réception pour la partie à emboîter (4) et au moins un élément de maintien (16) destiné à bloquer la partie logement (2) et la partie à emboîter (4) de manière solidaire par une liaison dynamique et/ou avec correspondance de forme, ainsi qu'un élément d'étanchéité (20) réalisé comme un joint annulaire destiné à assurer une étanchéité entre ces deux parties, et un élément faisant ressort (22), réalisé comme une pièce annulaire élastique, destiné à produire à l'intérieur du raccord à emboîtement une précontrainte s'exerçant dans le sens axial et dans le sens de la séparation, étant situés, dans la position d'emboîtement, entre la surface intérieure de la partie logement (2) et la surface extérieure de la partie à emboîter (4), la partie logement (22) présentant un étage de limitation (12) limitant la zone de réception et réduisant la section intérieure, en regardant dans le sens de l'emboîtement, ledit étage de limitation coopérant avec l'élément faisant ressort (22), lorsque la partie à emboîter (4) est en position d'emboîtement et bloquée, pour créer la précontrainte axiale entre la partie à emboîter (4) et la partie logement (2), et l'élément faisant ressort (22), ainsi que l'élément d'étanchéité (20) étant réalisés comme un élément combiné (14) en une seule pièce,
caractérisé en ce que l'élément combiné (14) est situé dans la zone avant, à enfoncer, de la partie à emboîter (4), sur celle-ci, l'élément d'étanchéité (20) réalisé comme un joint annulaire étant maintenu dans une première rainure (13a) de la partie à emboîter (4) et l'élément faisant ressort (22), réalisé comme une pièce annulaire élastique, étant situé sur la face avant de la partie à emboîter (4) et ces deux parties étant réunies en une seule par l'intermédiaire d'une pièce de liaison (24).

2. Raccord à emboîtement pour tuyaux sous pression, comprenant une partie logement (2) et une partie à emboîter (4), la partie logement (2) présentant une zone de réception pour la partie à emboîter (4) et au moins un élément de maintien (16) destiné à bloquer de manière solidaire par une liaison dynamique et/ou avec correspondance de forme la partie logement (2) et la partie à emboîter ( 4), ainsi qu'un élément d'étanchéité (20) réalisé comme un joint annulaire, destiné à assurer l'étanchéité entre ces deux parties, et un élément faisant ressort (22), réalisé comme une pièce annulaire élastique, destiné à créer, à l'intérieur du raccord à emboîtement, une précontrainte s'exerçant dans le sens axial et dans le sens de la séparation, étant situés, dans la position d'emboîtement, entre la surface intérieure de la partie logement (2) et la surface extérieure de la partie à emboîter (4), la partie logement (2) présentant un étage de limitation (12) limitant la zone de réception et réduisant la section intérieure, en regardant dans le sens de l'emboîtement, ledit étage de limitation coopérant avec l'élément faisant ressort (22), lorsque la partie à emboîter (4) est dans la position d'emboîtement et de blocage, pour créer la précontrainte axiale entre la partie à emboîter (4) et la partie logement (2), et l'élément faisant ressort (22) et l'élément d'étanchéité (20) étant réalisés comme un élément combiné (14) en une seule partie, situé sur la surface intérieure de la partie logement (2), et l'élément faisant ressort (22) reposant sur l'étage de limitation (12) à l'intérieur de la partie logement (2),
caractérisé en ce que l'élément d'étanchéité (20) est maintenu dans une première rainure annulaire de la partie logement (2) et est réuni en une seule pièce avec l'élément faisant ressort (22) par l'intermédiaire d'une pièce de liaison (24).

3. Raccord à emboîtement selon la revendication 1 ou 2,
caractérisé en ce que la pièce de liaison (24) est réalisée comme une bague de jonction fermée sur son pourtour.

4. Raccord à emboîtement selon la revendication 1 ou 2,
caractérisé en ce que la pièce de liaison (24), située entre l'élément d'étanchéité (20) et l'élément faisant ressort (22), comprend au moins une barrette de liaison, de préférence plusieurs barrettes de liaison réparties sur la circonférence.

5. Raccord à emboîtement selon l'une ou plusieurs des revendications 1 à 4,
caractérisé en ce que l'élément de maintien (16) est situé espacé de l'élément combiné (14), en regardant dans le sens de l'extraction, dans une deuxième rainure annulaire (13b) sur la partie à emboîter (4), et en ce que la partie logement (2) présente une surface radiale étagée pour coopérer de manière solidaire par une liaison dynamique et/ou avec concordance de forme avec l'élément de maintien (16) situé sur la partie à emboîter (4).

6. Raccord à emboîter selon une ou plusieurs des revendications 1 à 4,
caractérisé en ce que l'élément de maintien (16) est situé sur la surface intérieure de la partie logement (2), espacé de l'élément combiné (14) dans le sens axial, en regardant dans le sens de l'extraction, dans une deuxième rainure de la partie logement (2), et en ce que la partie à emboîter (4) présente une surface étagée dans le sens radial pour coopérer de manière solidaire par une liaison dynamique et/ou avec correspondance de forme avec l'élément de maintien (16) situé dans la partie logement (2).

7. Raccord à emboîtement selon une ou plusieurs des revendications 1 à 6,
caractérisé en ce que l'élément de maintien (16) est réalisé comme un anneau de blocage fendu, élastique dans le sens radial.

8. Raccord à emboîtement selon une ou plusieurs des revendications 1 à 7,
caractérisé en ce qu'un joint d'étanchéité aux poussières (18) est situé dans une autre rainure (13c) de la partie à emboîter (4), espacé de l'élément de maintien (16) en regardant dans le sens de l'extraction.

9. Raccord à emboîtement selon une ou plusieurs des revendications 1 à 8,
caractérisé en ce que la partie logement (2) est réalisée en deux parties et comprend une partie réception (6) et une partie obturation (8), ces deux parties étant assemblées de manière séparable.
